# EUROPÄISCHE PATENTANMELDUNG

(11) **EP 1 728 768 A1**
(43) Veröffentlichungstag der Anmeldung: **06.12.2006**
(21) Anmeldenummer: 06011325.5
(22) Anmeldetag: 01.06.2006
(51) Int. Cl.: C02F 1/467, C02F 1/04, C02F 1/42, C02F 1/44, C25B 1/26

(54) **Anlage zur Erzeugung eines Desinfektionsmittels mit einem Elektrolysemodul**

(30) Priorität: 03.06.2005 DE 20508695 U
(71) Anmelder: MAV Biophysikalische Verfahrenstechnik GmbH, 72793 Pfullingen (DE)
(72) Erfinder: Sautter, Harald, Dr., 72762 Reutlingen (DE)
(74) Vertreter: Ott, Elmar

(57) **Zusammenfassung**

Es wird eine Anlage zur Erzeugung eines Desinfektionsmittels und zur Entkeimung von Wasser und/oder wässrigen Lösungen vorgeschlagen, die einen Solebehälter (4) mit einer Kochsalzlösung hat, der mit einem Elektrolysemodul (EM) zur Erzeugung gespaltenen Wassers, welches als Desinfektionsmittel wirksam ist, verbunden ist. Der Solebehälter (4) und das Elektrolysemodul (EM) erhalten über eine Leitung (3) von einer Wasseraufbereitungsanlage (WAA) entmineralisiertes Wasser.

## Beschreibung

Die Erfindung betrifft eine Anlage zur Erzeugung eines Desinfektionsmittels mit einem Elektrolysemodul gemäß Oberbegriff des Anspruchs 1.

Es sind unterschiedliche Wasserdekontaminationssysteme bekannt, die mit Elektrolyseverfahren und/oder der Zugabe von chemischen Mitteln arbeiten.

Für die Anwendung in Trinkwassersystemen und im Lebensmittelbereich sind Dekontaminierungsgeräte bekannt, die als interaktive membrangesteuerte elektrochemische Geräte bezeichnet werden können. Diese Geräte arbeiten nachdem Prinzip der Elektrolyse. Dabei wird Wasser durch einen engen Spalt geleitet, gebildet von zwei Elektroden, nämlich der Anode und der Kathode. Zwischen beiden Elektroden ist eine interaktive Membran gelagert, die ein kathodisches und ein anodisches Kompartiment trennt. Mit dieser Methode entstehen metastabile und stabile Spaltprodukte, die an der Anode entstehen und zur Entkeimung hochwirksam sind.

Der Erfindung liegt die Aufgabe zugrunde, eine Anlage zur Entkeimung von Wasser zu schaffen, die mittels Elektrolyse arbeitet und mit einem möglichst guten Wirkungsgrad hochwirksames Desinfektionsmittel erzeugt, welches in Trinkwassersystemen, zur Sterilisierung von medizinischen Geräten, in der Lebensmittelindustrie und zur Desinfektion von Oberflächen geeignet ist.

Die Lösung dieser Aufgabe erhält man durch die im Anspruch 1 angegebenen Merkmale. Der in der Anlage verwendete Elektrolysemodul wird von einem Solebehälter mit gering dosierter Kochsalzlösung versorgt, wobei das zur Erzeugung der Kochsalzlösung verwendete Wasser in einer Wasseraufbereitungsanlage entmineralisiert wird. Durch die Verwendung von entmineralisiertem Wasser kann der Elektrolyseprozess optimal ablaufen und es entstehen insbesondere deutlich geringere unerwünschte Ablagerungen an den Elektroden im Elektrolysemodul.

Die Wasseraufbereitungsanlage kann einen Ionentauscher, Destillationseinrichtungen oder ein Gerät zur Durchführung einer Umkehrosmose enthalten.

Die erfindungsgemäße Anlage besitzt vorzugsweise einen Solebehälter, in welchem eine hochreine, gering dosierte Kochsalzlösung mit weniger als 0,9 % Kochsalzanteil bereitgehalten wird. Diese hochreine Kochsalzlösung ist in idealer Weise geeignet, um im Elektrolysemodul gespaltenes Wasser zu erzeugen, welches als Desinfektionsmittel verwendbar ist.

Zur Steuerung der Elektrolyse wird vorzugsweise mittels einer Messeinheit die Leitfähigkeit und/oder der PH-Wert und/oder das Redox-Potenzial des Desinfektionsmittels gemessen. Auf diese Weise können insbesondere die Durchflussmenge und die Spannung im Elektrolysemodul in Abhängigkeit der gemessenen Parameter so gesteuert werden, dass ein hochwirksames Desinfektionsmittel mit gleichbleibenden Eigenschaften erzeugt werden kann.

Bei der bevorzugten Ausführungsform ist die Wasseraufbereitungsanlage als Doppeleinheit ausgebildet, so dass im Wechsel eine Einheit die Wasseraufbereitung durchführt, während die andere Einheit regeneriert. Dadurch ist ohne Regenerationspausen eine kontinuierliche Wasseraufbereitung möglich, um dem Solebehälter ständig die erforderliche Menge an hochreinem, entmineralisiertem Wasser zuführen zu können.

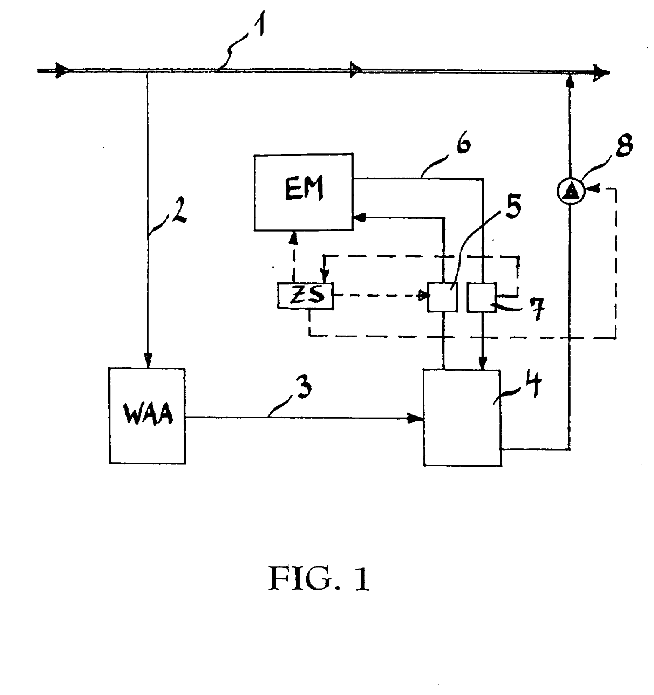

Die Erfindung wird nachfolgend anhand eines in der mit Figur 1 bezeichneten Zeichnung näher erläutert.

Figur 1 zeigt den grundsätzlichen Aufbau der erfindungsgemäßen Anlage anhand eines Blockdiagramms.

Die in Figur 1 dargestellte Anlage ist an eine Trinkwasserleitung 1 angeschlossen, wobei die Fließrichtung in der Trinkwasserleitung 1 durch Pfeile markiert ist.

Über eine Zufuhrleitung 2 entnimmt eine Wasseraufbereitungsanlage WAA Wasser der Trinkwasserleitung 1 und bereitet entmineralisiertes Wasser, welches über eine Leitung 3 einem Solebehälter 4 zugeführt wird. Mittels einer steuerbaren Pumpe 5 gelangt aus dem Solebehälter 4 eine gering dosierte Kochsalzlösung zu einem Elektrolysemodul EM, in welchem eine Spaltung erfolgt, so dass am Ausgang des Elektrolysemoduls EM das erzeugte Desinfektionsmittel über eine Leitung 6 zum Solebehälter 4 zurückgeführt wird. Die Eigenschaften des Desinfektionsmittels werden mittels einer Messeinheit 7 gemessen und an eine Zentralsteuerung ZS gemeldet. In Abhängigkeit von den erhaltenen Messwerten steuert die Zentralsteuerung ZS den Elektrolyseprozess im Elektrolysemodul EM. Insbesondere kann die Zentralsteuerung ZS die an den Elektroden im Elektrolysemodul EM anliegende Spannung verändern und auch die Durchflussmenge durch eine entsprechende Steuerung der Pumpe 5 verändern.

Aus dem Solebehälter 4 wird nur zur Desinfektion des Trinkwassersystems über eine Dosierpumpe 8 die erforderliche Menge von Desinfektionsmittel in die Trinkwasserleitung 1 eingespeist. Dieser Vorgang kann ebenfalls von der Zentralsteuerung ZS gesteuert werden, wenn der Zentralsteuerung ZS die Durchflussmenge in der Trinkwasserleitung 1 von einem hier nicht dargestellten Durchflussmessgerät mitgeteilt wird. Ansonsten kann auch die Dosierpumpe 8 Teil einer Dosiereinheit sein, die gleichzeitig die Durchflussmenge in der Trinkwasserleitung 1 misst und selbsttätig eine Dosierung des injizierten Desinfektionsmittels vomimmt.

## Patentansprüche

1. Anlage zur Erzeugung eines Desinfektionsmittels und zur Entkeimung von Wasser und/oder wässrigen Lösungen, die einen Solebehälter (4) mit einer Kochsalzlösung hat, der mit einem Elektrolysemodul (EM) zur Erzeugung gespaltenen Wassers, welches als Desinfektionsmittel wirksam ist, verbunden ist, **dadurch gekennzeichnet, dass** der Solebehälter (4) und das Elektrolysemodul (EM) über eine Leitung (3) von einer Wasseraufbereitungsanlage (WAA) entmineralisiertes Wasser erhält.

2. Anlage nach Anspruch 1, **dadurch gekennzeichnet, dass** die Wasseraufbereitungsanlage (WAA) einen Ionentauscher, oder eine Destillationseinrichtung oder ein Gerät zur Durchführung einer Umkehrosmose enthält.

3. Anlage nach einem der Ansprüche 1 oder 2, **dadurch gekennzeichnet, dass** im Solebehälter (4) eine hochreine, geringdosierte Kochsalzlösung bereitgehalten wird, die dem Elektrolysemodul (EM) zur Erzeugung des Desinfektionsmittels zugeführt wird.

4. Anlage nach Anspruch 3, **dadurch gekennzeichnet, dass** die Kochsalzlösung eine Kochsalzkonzentration von weniger als 0,9 % hat.

5. Anlage nach einem der Ansprüche 3 oder 4, **dadurch gekennzeichnet, dass** die Eigenschaften des am Ausgang des Elektrolysemoduls (EM) abgegebenen Desinfektionsmittels mittels einer Messeinheit (7) bestimmt werden, und dass die Messeinheit (7) in Abhängigkeit von den ermittelten Messwerten die Zufuhr der Kochsalzlösung zum Elektrolysemodul (EM) beeinflusst.

6. Anlage nach Anspruch 5, **dadurch gekennzeichnet, dass** die Messeinheit (7) die Leitfähigkeit und/oder den PH-Wert und/oder das Redox-Potential des Desinfektionsmittels misst.

7. Anlage nach einem der vorhergehenden Ansprüche , **dadurch gekennzeichnet, dass** eine Zentralsteuerung (ZS) die Spannung und die Durchflussgeschwindigkeit im Elektrolysemodul (EM) steuert.

8. Anlage nach einem der vorhergehenden Ansprüche, **dadurch gekennzeichnet, dass** eine Dosierpumpe (8) in ein angeschlossenes, zu dekontaminierendes Wasserleitungssystem die erforderliche Menge Desinfektionsmittel aus einem als Vorratsbehälter dienenden Solebehälter (4) einspeist.

9. Anlage nach einem der vorhergehenden Ansprüche , **dadurch gekennzeiehnet,** dass die Wasseraufbereitungsanlage (WAA) als Doppeleinheit ausgebildet ist, so dass im Wechsel eine Einheit die Wasseraufbereitung durchführt, während sich die andere Einheit regeneriert.
